# EUROPÄISCHE PATENTSCHRIFT

(11) **EP 1 068 659 B1**
(45) Veröffentlichungstag und Bekanntmachung des Hinweises auf die Patenterteilung: **21.11.2001**
(21) Anmeldenummer: 99924756.2
(22) Anmeldetag: 26.03.1999
(51) Int. Cl.: H02B 13/035

(54) **KAPSELUNGSBAUSTEIN MIT EINEM DREIPHASIGEN SCHALTGERÄT FÜR EINE GASISOLIERTE HOCHSPANNUNGSSCHALTANLAGE**
ENCAPSULATING MODULE WITH A THREE-PHASE SWITCHING DEVICE FOR A GAS-INSULATED HIGH-VOLTAGE SWITCHING INSTALLATION
MODULE D'ENCAPSULAGE DOTE D'UN APPAREIL DE CONNEXION TRIPHASE DESTINE A UN EQUIPEMENT ELECTRIQUE HAUTE TENSION

(30) Priorität: 03.04.1998 DE 19816366
(43) Veröffentlichungstag der Anmeldung: 17.01.2001
(73) Patentinhaber: SIEMENS AKTIENGESELLSCHAFT, 80333 München (DE)
(72) Erfinder: MEINHERZ, Manfred, D-13467 Berlin (DE); DAMBIETZ, Hans-Peter, D-13589 Berlin (DE)
(86) Internationale Anmeldenummer: DE9901006
(87) Internationale Veröffentlichungsnummer: WO9952186

(56) Entgegenhaltungen:
- EP-A- 0 433 183
- EP-A- 0 803 888
- DE-A- 19 632 574
- GB-A- 2 126 790

## Beschreibung

Die Erfindung liegt auf dem Gebiet der Energieverteilung und ist bei der konstruktiven Ausgestaltung eines mit einem Zwei-oder Drei-Stellungsschalter versehenen Kapselungsbausteines einer gasisolierten Hochspannungsschaltanlage anzuwenden, bei dem die als zylindrische, in ihrer Längssrichtung verschiebbare Kontaktteile ausgebildeten Schaltelemente für die drei Phasenleiter in gehäuseartige Teile der Phasenleiter integriert und mittels einer gemeinsamen Schaltwelle antreibbar sind.

Bei einem bekannten Kapselungsbaustein dieser Art (DE 25 39 996 A1; DE 196 32 574 A1) sind die Schaltelemente im Bereich einer 90°-Umlenkung der Phasenleiter parallel zueinander in einer Ebene angeordnet und zusammen mit dem zugehörigen Getriebe jeweils in einem gehäuseartigen Teil des zugehörigen Phasenleiters angeordnet, wobei die Schaltwelle diese gehäuseartigen Teile durchdringt und einendig in einer Gehäusedurchführung des Kapselungsbausteines sowie jeweils in den gehäuseartigen Teilen der Phasenleiter gelagert ist. - Für einen ähnlich aufgebauten Kapselungsbaustein, bei dem jedoch als Schaltelemente Kontaktmesser verwendet sind, besteht die Schaltwelle aus mehreren isolierenden Abschnitten, die im Bereich der Durchdringung der Phasenleiter über die Kontaktmesser axial miteinander verkuppelt sind (EP 0 128 377 A2, Figur 8).

Bei einem weiterhin bekannten Kapselungsbaustein mit darin angeordnetem Drei-Stellungsschalter für die drei Phasenleiter einer Hochspannungsschaltanlage sind als Schaltelemente ebenfalls Kontaktmesser verwendet. Diese sind jeweils an einer verdrehbaren Halterung aus Isolierstoff gehaltert, wobei diese Halterung zwei zur Drehachse koaxiale Wellenstummel und dazwischen einen in der Art einer Kurbelwelle abgekröpften Abschnitt besitzt (DE 35 11 668 A1).

Es ist weiterhin ein dreiphasig gekapselter, Zwei-Stellungs-Schalter bekannt, bei dem die als zylindrische Kontaktteile ausgebildeten Schaltelemente in ihrer Längsrichtung mittels einer gemeinsamen, als isolierender Stab ausgebildeten Schaltwelle über ein jeweils zwischengeschaltetes Getriebe antreibbar sind, wobei die Schaltwelle im Gehäuse des Schalters gelagert ist und jedes Getriebe aus einen auf der Schaltwelle form- oder kraftschlüssig befestigten, einarmigen Hebel aufweist. Der Hebel greift dabei in ein an dem einen Ende des Kontaktteiles angeordneten, gabelartig gestaltetes Kraftübertragungsteil ein; dieses Ende des Kontaktteiles ist über einen flexiblen Stromleiter mit einer in der Wandung des Gehäuses angeordneten Stromdurchführung verbunden (EP-A-0433183).

Ausgehend von einem Kapselungsbaustein mit den Merkmalen des Oberbegriffes des Patentanspruches 1 (DE 196 32 574 A1) liegt die Erfindung die Aufgabe zugrunde, die isolierte Betätigung der Schaltelemente konstruktiv zu vereinfachen und möglichst montagefreundlich zu gestalten.

Zur Lösung dieser Aufgabe ist es gemäß der Erfindung vorgesehen, dass jedes Schaltelement mittels eines einarmigen Hebels antreibbar ist, der form- oder kraftschlüssig auf der als isolierender Stab ausgebildeten Schaltwelle befestigt ist, wobei die Schaltwelle in den gehäuseartigen Teilen der Phasenleiter jeweils mittels einer in einer geschirmten Vertiefung des gehäuseartigen Teiles angeordneten Lagerbuchse geführt ist.

Eine derartige Ausgestaltung des Antriebsweges für die Schaltelemente zeichnet sich durch einen isolierenden Stab als Antriebswelle aus, d. h. die Schaltwelle ist im Bereich der drei nebeneinander angeordneten Phasenleiterabschnitte ein einstückiges Gebilde, auf das einarmige Antriebshebel für die Schubbewegung der Schaltelemente form- und/oder kraftschlüssig aufgesetzt sind. Der Formschluß kann beispielsweise durch eine Unrundheit der Schaltwelle gegeben sein, auf die der jeweilige Schalthebel nach Art einer Schelle aufgesetzt ist. - Die Ausgestaltung der Schaltwelle als einstückiger Isolierstab ermöglicht es auch, die Schaltwelle im Bereich der Phasenleiter lediglich mit Hilfe von Führungsbuchsen zu führen, so dass bei einseitiger Lagerung der Schaltwelle im Gehäuse des Kapselungsbausteines kein weiteres Lager erforderlich ist. Generell besteht aber die Möglichkeit, die Schaltwelle beidendig im Gehäuse des Kapselungsbausteines zu lagern.

Hinsichtlich der montagefreundlichen Ausgestaltung des Antriebsweges ist es von Vorteil, wenn die Schaltwelle aus zwei Teilabschnitten besteht, die im Bereich des gehäuseartigen Teiles eines der beiden außenliegenden Phasenleiter miteinander axial lösbar verbunden sind. Dadurch ist die Möglichkeit gegeben, nur den gehäuseseitigen Teil der Schaltwelle zu demontieren und - ohne die Schaltwelle als Ganzes demontieren zu müssen - einen Zugang durch die Lageröffnung hindurch zu den einzelnen Schaltstrecken zu haben. - Wenn man weiterhin das Gehäuse des Kapselungsbausteines an jedem Ende der Schaltwelle mit einer Lageröffnung versieht, kann der gehäuseseitige Teil der Schaltwelle sowohl von der einen als auch von der anderen Seite eingesteckt werden, wodurch auf einfache Weise ein Freiheitsgrad für die Ankopplung des Motorantriebes gegeben ist.

Die Teilung der Schaltwelle im Bereich eines außenliegenden Phasenleiterabschnittes - wobei der längere Teil des Isolierstabes nur die drei Phasen miteinander verbindet - ermöglicht weiterhin, die Phasenleiterabschnitte mit den integrierten Schalterteilen außerhalb des Kapselungsgehäuses komplett vorzumontieren.

Als axial lösbare Verbindung der beiden Teilabschnitte der Schaltwelle kommt zweckmäßig eine die Schaltwelle konzentrisch umgebende, in Umfangsrichtung formschlüssige Kupplung in Betracht. Dabei kann der eine Teil der Kupplung mit dem Antriebshebel des zugehörigen Schaltelementes fest verbunden sein.

Zwei Ausführungsbeispiele für die neuartige Gestaltung des Antriebsweges der Schaltelemente sind in den Figuren 1 bis 3 dargestellt.

Dabei zeigt
- Figur 1: die Zuordnung einer beidseitig gelagerten Schaltwelle zu den drei Phasenleitern innerhalb eines Kapselungsbausteines,
- Figur 2: die Ankopplung der Schaltelemente an die Schaltwelle und
- Figur 3: die geteilte Ausgestaltung der Schaltwelle im Bereich eines außenliegenden Phasenleiters.

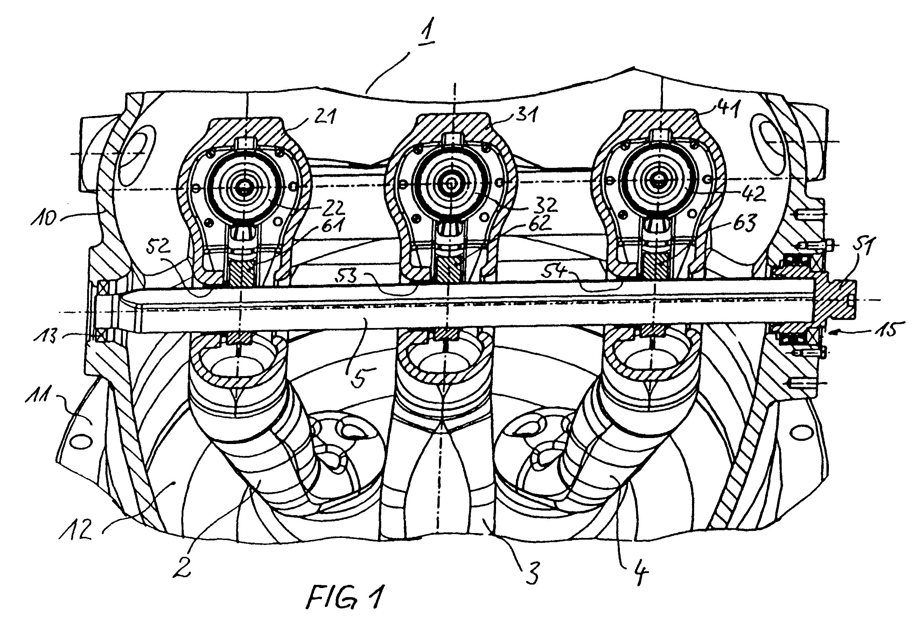

Figur 1 zeigt ausschnittsweise einen Kapselungsbaustein 1, der das Metallgehäuse 10 aufweist, das mit mehreren Anschlußflanschen versehen ist, von denen der Anschlußflansch 11 erkennbar ist. An diesem Anschlußflansch ist ein Scheibenisolator 12 befestigt, der mit Durchführungen für drei Phasenleiter versehen ist, wobei an den Durchführungen Phasenleiterstücke 2,3 und 4 befestigt sind. Die Phasenleiterstücke sind zu gehäuseartigen Teilen 21, 31 und 41 erweitert, die parallel nebeneinander in einer Ebene angeordnet sind. Jedes gehäuseartige Teil nimmt ein zylindrisches Schaltelement 22 bzw. 32 bzw. 42 auf, das etwa senkrecht zur Zeichenebene verschiebbar ist. Die Verschiebung der Schaltelemente erfolgt dabei mit Hilfe der Schaltwelle 5, die die gehäuseartigen Teile 21, 31 und 41 durchdringt und in diesen gehäuseartigen Teilen mit Hilfe von Lagerbuchsen 52, 53 und 54 geführt ist. Die Schaltwelle 5 ist an ihrem einen Ende mit einer Ankoppelbuchse 51 versehen, die in einer Lageröffnung 15 gasdicht gelagert ist. Am anderen Ende ist die Schaltwelle mit einem einfachen Lager 13 gelagert, wobei die zugehörige Lageröffnung mit Hilfe eines nicht dargestellten Lagerdeckels gasdicht verschließbar ist.

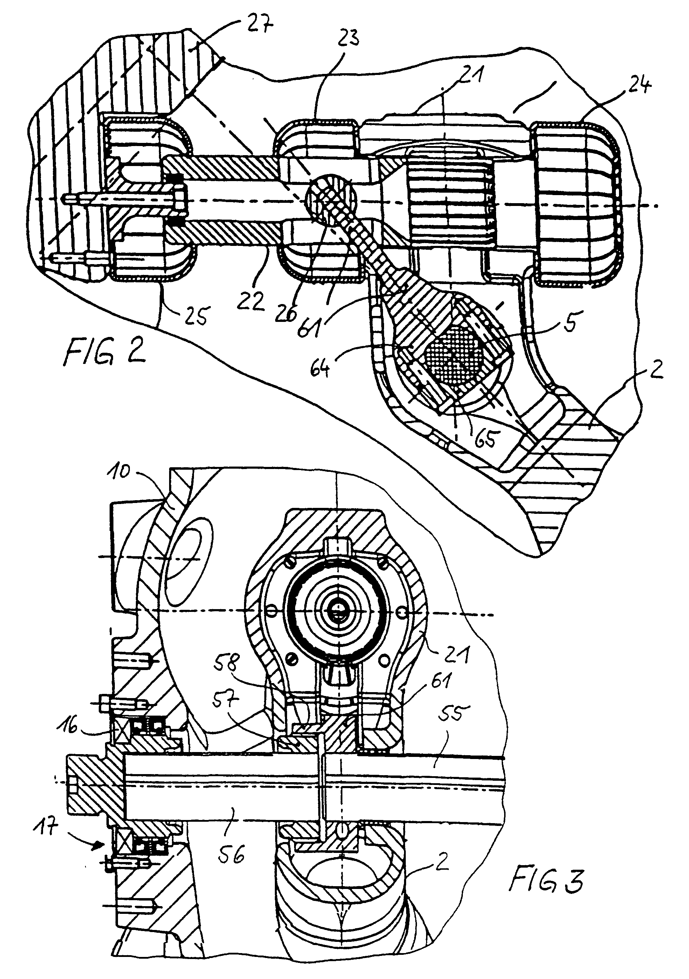

Auf die Schaltwelle 5 sind einarmige Antriebshebel 61, 62 und 63 aufgeklemmt, die mit ihrem frei bewegbaren Ende in die Schaltelemente 22, 32 und 42 eingreifen. Gemäß Figur 2, die die Zuordnung von Schaltwelle 5, Antriebshebel 61 und Schaltelement 22 zeigt, ist der Antriebshebel 61 an seinem drehbar gelagerten Ende nach Art einer Schelle mit den Teilen 64 und 65 ausgebildet und formschlüssig auf die leicht abgeflachte Schaltwelle 5 aufgesetzt. Das freie Ende des Schalthebels greift in eine Ankoppelbuchse 26 ein, die in dem als zylindrisches Kontaktstück ausgebildeten Schaltelement 22 drehbar gelagert ist. Das Schaltelement 22 befindet sich in dem gehäuseartigen Teil 21 des Phasenleiters 2. Das gehäuseartige Teil 21 ist dabei mit zwei Tulpenkontakten 23 und 24 versehen, wobei ein gleichartiger Tulpenkontakt 25 an einem mit Hilfe des Schaltelementes 22 zu kontaktierenden Phasenleiterstückes 27 angeordnet ist. Die Achse dieses Phasenleiterstükkes 27 bildet mit der Achse des Phasenleiters 2 einen Winkel von 90°.

Gemäß Figur 3 ist die Schaltwelle im Bereich des gehäuseartigen Teiles 21 des Phasenleiters 2 axial geteilt, so daß ein Teilabschnitt 55 gebildet ist, auf dem die Antriebshebel der drei Schaltelemente aufsitzen, und ein zweiter Teilabschnitt 56, der der Lagerung der Schaltwelle und der Einspeisung der Antriebskräfte dient. Die beiden Teilabschnitte 55 und 56 sind dabei mittels einer Kupplung axial lösbar verbunden, die aus den beiden das eine Ende des Schaltwellenteiles 56 konzentrisch umgebenden, axial ineinander greifenden Kupplungsstücken 57 und 58 besteht. Das Kupplungsstück 58 ist dabei einstückig mit dem Antriebshebel 61 ausgebildet.

Der Teilabschnitt 55 der Schaltwelle ist vorzugsweise so ausgebildet, daß er nur bis zum Antriebshebel des anderen außen liegenden Phasenleiterstückes reicht. Zweckmäßig ist an diesem Ende im Gehäuse des Kapselungsbausteines eine Lageröffnung vorgesehen, die der Lageröffnung 17 am gasdicht gestalteten Lager 16 entspricht. In diesem Fall kann ein Teilabschnitt 56 der Schaltwelle alternativ mit dem einen oder dem anderen Ende des Teilabschnittes 55 der Schaltwelle verbunden werden, sofern an dem dem anderen außenliegenden Phasenleiterstück zugehörigen Antriebshebel ebenfalls ein Kupplungsstück 58 vorgesehen ist. Dies eröffnet einen gewissen Freiheitsgrad bei der Anordnung des zugehörigen Schaltwellenantriebes im Bereich eines Schaltfeldes einer Hochspannungsschaltanlage.

## Patentansprüche

1. Kapselungsbaustein (1) mit einem Zwei- oder Drei-Stellungs-Schalter für die drei gemeinsam gekapselten Phasenleiter (2, 3, 4)einer gasisolierten Hochspannungsschaltanlage,
bei dem die Schaltelemente (22, 32, 42) für die drei Phasenleiter als zylindrische Kontaktteile ausgebildet und parallel zueinander in einer Ebene angeordnet und in ihrer Längsrichtung mittels einer gemeinsamen, wenigstens einendig im Gehäuse des Kapselungsbausteines gelagerten Schaltwelle (5) über ein jeweils zwischengeschaltetes Getriebe (61, 26) antreibbar sind und bei dem jedes Schaltelement und das zugehörige Getriebe in einem gehäuseartigen, von der Schaltwelie durchdrungenen Teil (21, 31, 41) des zugehörigen Phasenleiters angeordnet sind,
**dadurch gekennzeichnet,**
**dass** jedes Schaltelement (22, 32, 42)mittels eines einarmigen Hebels (61, 62, 63) antreibbar ist, der form- oder kraftschlüssig auf der als isolierender Stab ausgebildeten Schaltwelle (5) befestigt ist,
wobei die Schaltwelle in den gehäuseartigen Teilen (21, 31, 41) der Phasenleiter jeweils mittels einer in einer geschirmten Vertiefung des gehäuseartigen Teiles angeordneten Lagerbuchse (52, 53, 54) geführt ist.

2. Kapselungsbaustein nach Anspruch 1,
**dadurch gekennzeichnet,**
**dass** die Schaltwelle (5) beidendig im Gehäuse des Kapselungsbausteines gelagert (13, 15) ist.

3. Kapselungsbaustein nach Anspruch 1,
**dadurch gekennzeichnet,**
**dass** die Schaltwelle aus zwei Teilabschnitten (55, 56) besteht, die im Bereich des gehäuseartigen Teiles (21) eines der beiden außenliegenden Phasenleiter (2) miteinander axial lösbar (57, 58) verbunden sind.

4. Kapselungsbaustein nach Anspruch 3,
**dadurch gekennzeichnet,**
**dass** die lösbare Verbindung aus einer die Schaltwelle (55, 56) konzentrisch umgebenden, in Umfangsrichtung formschlüssigen Kupplung (57, 58) besteht.

5. Kapselungsbaustein nach Anspruch 4,
**dadurch gekennzeichnet,**
**dass** der eine Teil (58) der Kupplung mit dem Antriebshebel (61) des zugehörigen Schaltelementes (22) fest verbunden ist.

6. Kapselungsbaustein nach einem der Ansprüche 1 bis 5,
**dadurch gekennzeichnet,**
**dass** das Gehäuse (10) des Kapselungsbausteines an jedem Ende der Schaltwelle mit einer Lageröffnung (15, 17) versehen ist.

## Claims

1. Encapsulation module (1) having a two or three-position switch for the three jointly encapsulated phase conductors (2, 3, 4) of a gas-insulated high-voltage switchgear assembly, in which the switching elements (22, 32, 42) for the three phase conductors are in the form of cylindrical contact parts, are arranged parallel to one another in a plane and can be driven in their longitudinal direction by means of a common operating shaft (5), which is mounted at at least one end in the housing of the encapsulation module, via a respectively intermediate transmission (61, 26), and in which each switching element and the associated transmission are arranged in a housing-like part (21, 31, 41) through which the operating shaft passes, of the associated phase conductor,
**characterized**
**in that** each switching element (22, 32, 42) can be driven by means of a single-armed lever (61, 62, 63) which is mounted in a positively locked or force-fitting manner on the operating shaft (5) which is in the form of an insulating rod,
with the operating shaft being guided in each of the housing-like parts (21, 31, 41) of the phase conductors by means of a bearing bush (52, 53, 54) which is arranged in a screened depression in the housing-like part.

2. Encapsulation module according to Claim 1,
**characterized**
**in that** the operating shaft (5) is mounted (13, 15) at both ends in the housing of the encapsulation module.

3. Encapsulation module according to Claim 1,
**characterized**
**in that** the operating shaft comprises two subsections (55, 56) which are connected to one another, such that they can be detached axially (57, 58), in the region of the housing-like part (21) of one of the two outer phase conductors (2).

4. Encapsulation module according to Claim 3,
**characterized**
**in that** the detachable connection comprises a coupling (57, 58) which concentrically surrounds the operating shaft (55, 56) and is positively locking in the circumferential direction.

5. Encapsulation module according to Claim 4,
**characterized**
**in that** one part (58) of the coupling is firmly connected to the drive lever (61) of the associated switching element (22).

6. Encapsulation module according to one of Claims 1 to 5,
**characterized**
**in that** the housing (10) of the encapsulation module is provided with a bearing opening (15, 17) at each end of the operating shaft.

## Revendications

1. Module d'encapsulage (1) équipé d'un commutateur à deux ou trois positions pour les trois conducteurs de phase (2, 3, 4) encapsulés conjointement d'une installation de distribution à haute tension isolée au gaz,
dans lequel les éléments de commutation (22, 32, 42) pour les trois conducteurs de phase sont réalisés sous forme de pièces de contact cylindriques, sont disposés parallèlement entre eux dans un plan et peuvent être entraînés dans leur direction longitudinale au moyen d'un arbre de commande (5) commun monté à au moins une extrémité dans le boîtier du module d'encapsulage, par l'intermédiaire d'une transmission intermédiaire (61, 26) et dans lequel chaque élément de commutation et la transmission associée sont disposés dans une partie (21, 31, 41) de type boîtier, traversée par l'arbre de commande, du conducteur de phase associé,
**caractérisé en ce**
**que** chaque élément de commutation (22, 32, 42) peut être entraîné au moyen d'un levier (61, 62, 63) à bras unique qui est fixé par complémentarité de formes ou par application d'une force sur l'arbre de commande (5) réalisé sous forme de barre isolante,
l'arbre de commande étant guidé dans les parties de type boîtier (21, 31, 41) des conducteurs de phase au moyen d'un coussinet (52, 53, 54) disposé dans une cavité blindée de la partie de type boîtier.

2. Module d'encapsulage selon la revendication 1,
**caractérisé en ce**
**que** l'arbre de commande (5) est monté (13, 15) aux deux extrémités dans le boîtier du module d'encapsulage.

3. Module d'encapsulage selon la revendication 1,
**caractérisé en ce**
**que** l'arbre de commande est formé de deux tronçons (55, 56) qui sont reliés entre eux de manière démontable (57, 58) dans la direction axiale, dans la région de la partie de type boîtier (21) de l'un des deux conducteurs de phases (2) extérieurs.

4. Module d'encapsulage selon la revendication 3,
**caractérisé en ce**
**que** l'assemblage démontable est formé d'un dispositif d'accouplement (57, 58) à complémentarité de formes dans la direction périphérique qui entoure de manière concentrique l'arbre de commande (55, 56).

5. Module d'encapsulage selon la revendication 4,
**caractérisé en ce**
**que** l'une des pièces (58) du dispositif d'accouplement est reliée de manière fixe au levier d'entraînement (61) de l'élément de commutation (22) associé.

6. Module d'encapsulage selon l'une des revendications 1 à 5,
**caractérisé en ce**
**que** le boîtier (10) du module d'encapsulage est pourvu d'une ouverture de montage (15, 17) à chaque extrémité de l'arbre de commande.
